# EUROPEAN PATENT APPLICATION

(11) **EP 1 367 805 A1**
(43) Date of publication of application: **03.12.2003**
(21) Application number: 03253117.0
(22) Date of filing: 19.05.2003
(51) Int. Cl.: H04M 1/60, H04B 1/38

(54) **Handfree call apparatus and handfree call method**

(30) Priority: 28.05.2002 JP 2002153459
(71) Applicant: Pioneer Corporation, Meguro-ku, Tokyo (JP)
(72) Inventor: Suenaga, Shoji, c/o Pioneer Corporation, Kawagoe-shi, Saitama (JP)
(74) Representative: Haley, Stephen

(57) **Abstract**

When connections among a cellular telephone, a car stereo body part and an operation part are made by wireless and the operation part is attached to the car stereo body part, a call using the cellular telephone is enabled at the side of the car stereo body part and when the operation part is detached from the car stereo body part, a call using the cellular telephone is enabled at the side of the operation part. As a result of this, a driver enables a handsfree call by placing a microphone for driver near to the driver of a sun visor etc. and when a fellow passenger wants to call instead of the driver, a call is enabled in the operation part 11 by detaching the operation part from the car stereo body part.

## Description

This application is based on and claims priority with respect to Japanese Patent Application No. 2002-153459 filed on May 28, 2002, the entire content of which is incorporated herein by reference.

The present invention relates to a handsfree call apparatus and a handsfree call method capable of a call even in a state (handsfree state) in which a cellular telephone is released from a hand.

Conventionally, a handsfree call apparatus capable of a call by a cellular telephone without releasing a handle even during a drive of a vehicle has been developed. This handsfree call apparatus includes an apparatus obtained in combination with a vehicle-mounted system of car navigation. It is constructed so that a microphone for handsfree and operation parts for outgoing and incoming (not shown) are placed near to a driver (for example, a sun visor). When a driver makes a call using this handsfree call apparatus, the driver connects a cellular telephone to its apparatus and operates a button for outgoing of an operation part and then inputs a telephone number of a call destination according to voice guidance issued from a speaker for guide or specifies a telephone number of a call destination registered previously. Then, after a line is connected through the cellular telephone, a call is started. In this case, voice of the driver is collected by the microphone for handsfree and voice of a call opponent is outputted from the speaker for guide.

By the way, in the conventional handsfree call apparatus described above, there is a problem that it cannot sufficiently cope with use of a fellow passenger. That is, when the fellow passenger wants to speak to the call opponent while the driver is speaking to the call opponent of the outside a vehicle, for example, the fellow passenger just had to loudly speak toward the microphone for handsfree attached to a sun visor near to the driver, or speak with the cellular telephone detached from the handsfree apparatus by the driver.

Incidentally, in recent years, a handsfree call apparatus using Bluetooth (standards in which the range to a communication distance of about 10 m by sending electric power of 1 mW is covered and devices such as a cellular telephone, a personal computer or a PDA are connected by wireless) has been developed, and connection to a cellular telephone by wireless can be made, so that a call can be made, for example, even in a state in which the cellular telephone has been put in a bag. However, in the case that the cellular telephone is present in a place, for example, a bag in which a fellow passenger cannot grasp a location of the cellular telephone, in a manner similar to the above, the fellow passenger just has to loudly speak or seek the cellular telephone. That is, also in this case, it cannot sufficiently cope with use of the fellow passenger.

The invention is implemented in view of the circumstances described above, and an object of the invention is to provide a handsfree call apparatus and a handsfree call method in which a fellow passenger can also make a call easily.

To achieve the above object, according to one aspect of the invention, there is provided a handsfree call apparatus provided in a vehicle-mounted electronic device in which an operation part can be attached and detached to and from a body part and can communicate between each of the operation part and the body part and a cellular telephone by a wireless communication line, the apparatus comprising:
an attachment and detachment detector for detecting attachment and detachment of the operation part to and from the body part; and
a control section for enabling a handsfree call through the cellular telephone at the side of the body part when the attachment and detachment detector detects that the operation part is attached to the body part and enabling a call through the cellular telephone at the side of the operation part when it detects that the operation part is detached from the body part.

According to this configuration, when connections among a cellular telephone, a body part and an operation part of a vehicle-mounted electronic device are made by a wireless communication line and the operation part of the vehicle-mounted electronic device is attached to the body part, a call using the cellular telephone is enabled at the side of the body part and when the operation part of the vehicle-mounted electronic device is detached from the body part, a call using the cellular telephone is enabled at the side of the operation part. Therefore, while the operation part of the vehicle-mounted electronic device is attached to the body part, a driver enables a handsfree call at the side of the body part and when a fellow passenger wants to call instead of the driver, a call is enabled at the side of the operation part by detaching the operation part from the body part.

According to another aspect of the invention, there is provided a handsfree call apparatus provided in a vehicle-mounted electronic device in which an operation part can be attached and detached to and from a body part and can communicate between each of the operation part and the body part and a cellular telephone by a wireless communication line, the apparatus comprising:
a first voice input section provided at the side of the body part;
a second voice input section provided at the side of the operation part;
a first communication section for sending voice inputted to the first voice input means at the side of the body part to the cellular telephone by the wireless communication line;
a second communication section for sending voice inputted to the second voice input means at the side of the operation part to the cellular telephone by the wireless communication line;
an attachment and detachment detector for detecting attachment and detachment of the operation part to and from the body part;
a first control section for sending only voice inputted by the first voice input section when the attachment and detachment detector detects that the operation part is attached to the body part and outputting a continuation signal while the operation part is attached to the body part; and
a second control section for sending only voice inputted by the second voice input section when the continuation signal is not outputted from the body part.

According to this configuration, when connections among a cellular telephone, a body part and an operation part of a vehicle-mounted electronic device are made by a wireless communication line and the operation part of the vehicle-mounted electronic device is attached to the body part, a call using the cellular telephone is enabled at the side of the body part and when the operation part of the vehicle-mounted electronic device is detached from the body part, a call using the cellular telephone is enabled at the side of the operation part. Therefore, a driver enables a handsfree call by placing a microphone acting as first voice input means near to the driver of a sun visor etc. and when a fellow passenger wants to call instead of the driver, by detaching the operation part of the vehicle-mounted electronic device from the body part, a voice input by a microphone acting as second voice input means becomes valid and a call using the operation part is enabled.

According to another aspect of the invention, there is provided a handsfree call method using a vehicle-mounted electronic device in which an operation part can be detached from a body part and each of the operation part and the body part is provided with a microphone for call and can communicate with a cellular telephone by wireless, the method comprising:
switching a microphone at the side of the body part and a microphone at the side of the operation part according to attachment and detachment of the operation part to and from the body part;
enabling a call using the cellular telephone at the side of the body part while the operation part is attached to the body part; and
enabling a call using the cellular telephone at the side of the operation part while the operation part is detached from the body part.

According to this method, when an operation part of a vehicle-mounted electronic device is attached to a body part, a call using a cellular telephone is enabled at the side of the body part and when the operation part of the vehicle-mounted electronic device is detached from the body part, a call using the cellular telephone is enabled at the side of the operation part. Therefore, a driver enables a handsfree call by placing a microphone for call near to the driver of a sun visor etc. and when a fellow passenger wants to call instead of the driver, by detaching the operation part from the body part, a voice input by a microphone of the operation part becomes valid and a call is enabled.

These and other objects and advantages of this invention will become more fully apparent from the following detailed description taken with the accompanying drawings in which:
Fig. 1 is ablock diagram showing a schematic configuration of a car stereo providing a handsfree call apparatus according to an embodiment of the invention;
Fig. 2 is a block diagram showing a configuration of the handsfree call apparatus according to the embodiment of the invention;
Fig. 3 is a flowchart describing an action of a part of the side of a car stereo body part of the hands free call apparatus according to the embodiment of the invention; and
Fig. 4 is a flowchart describing an action of a part of the side of a car stereo operation part of the handsfree call apparatus according to the embodiment of the invention.

An embodiment of the invention will be described in detail with reference to the accompanying drawings.

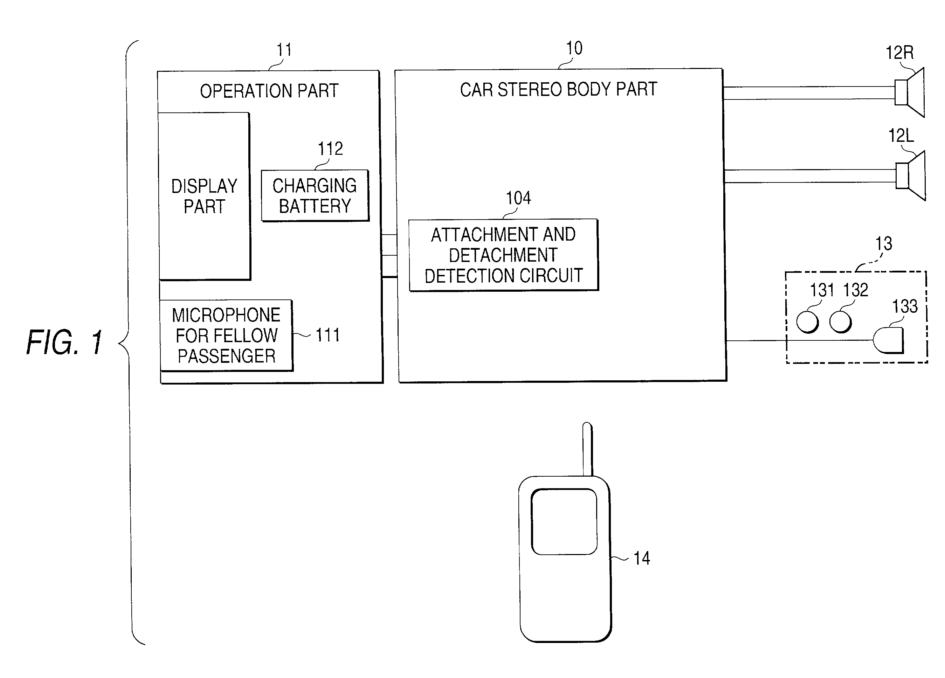

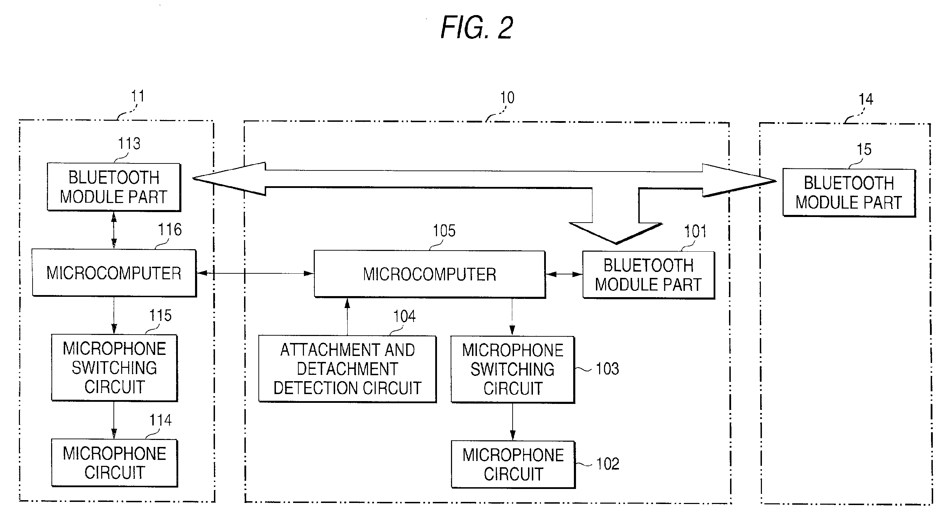

Fig. 1 is a schematic configuration diagram of a car stereo (vehicle-mounted electronic device) using a handsfree call apparatus according to the embodiment of the invention. Also, Fig. 2 is a block diagram showing a configuration of the handsfree call apparatus according to the present embodiment. Incidentally, the handsfree call apparatus of the embodiment has a Bluetooth function and is constructed so as to be able to make connection to a cellular telephone having the same Bluetooth function by wireless.

In Fig. 1, the car stereo to which the handsfree call apparatus of the embodiment is applied is constructed so that an operation part 11 can be attached and detached to and from a body part 10. The reason why the operation part 11 is constructed so as to be able to be detached from the body part 10 is because of theft prevention. The operation part 11 is provided with a microphone 111 for fellow passenger and a charging battery 112 in addition to various switches for operating the car stereo or a liquid crystal display for displaying an action state of the car stereo.

On the other hand, the body part 10 is provided with right and left speakers 12R, 12L and an operation part 13 for driver. The operation part 13 for driver is used at the time of a handsfree call and is provided with a button 131 for outgoing, a button 132 for incoming and a microphone 133 for driver. A cellular telephone 14 is provided with a Bluetooth module part 15 for communicating with the body part 10 and the operation part 11 by Bluetooth.

The handsfree call apparatus of the embodiment comprises a part provided in the body part 10 of the car stereo described above and a part provided in the operation part 11, and it is constructed so that these parts can be respectively connected to the cellular telephone 14 by Bluetooth. The part provided in the car stereo body part 10 comprises a Bluetooth module part 101, a microphone circuit 102, a microphone switching circuit 103, an attachment and detachment detection circuit 104, and a microcomputer 105 as shown in Fig. 2. The Bluetooth module part 101 sends and receives a signal in conformity with Bluetooth standards. The microphone circuit 102 amplifies and outputs a voice signal outputted from the microphone 133 for driver of the driver operation part 13.

The microphone switching circuit 103 performs switching of the microphones according to a microphone switching signal from the microcomputer 105. That is, when a microphone switching signal for switching to the microphone 133 for driver is inputted from the microcomputer 105, an action of the microphone circuit 102 is made valid. The attachment and detachment detection circuit 104 detects attachment and detachment of the operation part 11 to and from the body part 10. The microcomputer 105 comprises a CPU, RAM and ROM (not shown), and controls the Bluetooth module part 101 and the microphone switching circuit 103, and also gives and receives data to and from a microcomputer 116 of the operation part 11.

When a power source of the car stereo shifts from OFF to ON in a state in which the operation part 11 is attached to the body part 10, the microcomputer 105 inputs a microphone switching signal for making an action of the microphone circuit 102 valid to the microphone switching circuit 103 and enables a handsfree call by a driver. Also, a continuation signal to the effect that the action of the microphone circuit 102 is valid continues to be outputted to the microcomputer 116 of the operation part 11 continuously until the operation part 11 is detached. Then, when the operation part 11 is detached in this state, a microphone switching signal for making the action of the microphone circuit 102 invalid is inputted to the microphone switching circuit 103 to disable the handsfree call by the driver and also an output of the continuation signal is stopped.

Further, when the power source of the car stereo shifts from OFF to ON in a state in which the operation part 11 is detached, in a manner similar to the above, the action of the microphone circuit 102 is made valid to enable the handsfree call by the driver. Then, when the operation part 11 is attached in this state, a continuation signal is outputted. Thereafter, when the operation part 11 is detached, a microphone switching signal for making the action of the microphone circuit 102 invalid is inputted to the microphone switching circuit 103 and also an output of the continuation signal is stopped.

On the other hand, the part provided in the operation part 11 comprises a Bluetooth module part 113, a microphone circuit 114, a microphone switching circuit 115, and a microcomputer 116 as shown in Fig. 2. The Bluetooth module part 113 sends and receives a signal in conformity with Bluetooth standards. The microphone circuit 114 amplifies avoice signal outputted from the microphone 111 for fellow passenger.

The microphone switching circuit 115 performs switching of the microphones according to a microphone switching signal from the microcomputer 116. That is, when a microphone switching signal for switching to the microphone 111 for fellow passenger is inputted from the microcomputer 116, an action of'the microphone circuit 114 is made valid. The microcomputer 116 comprises a CPU, RAM and ROM (not shown), and controls the Bluetooth module part 113 and the microphone switching circuit 115, and also gives and receives data to and from the microcomputer 105 of the body part 10.

While a continuation signal is inputted from the microcomputer 105 of the body part 10, the microcomputer 116 inputs a microphone switching signal for making an action of the microphone circuit 114 invalid to the microphone switching circuit 115 and disables a call by a fellow passenger. When the continuation signal is not inputted, a microphone switching signal for making the action of the microphone circuit 114 valid is inputted to the microphone switching circuit 115 to enable the call by the fellow passenger. Also, in the microcomputer 116, when a power source of the car stereo shifts to OFF in a state in which the operation part 11 is detached from the body part 10, connection to the body part 10 by Bluetooth is released, so that a power source of the operation part 11 is automatically turned off. Thereafter, when the power source of the car stereo shifts to ON and connection to the body part 10 by Bluetooth is established, the power source of the operation part 11 is automatically turned on.

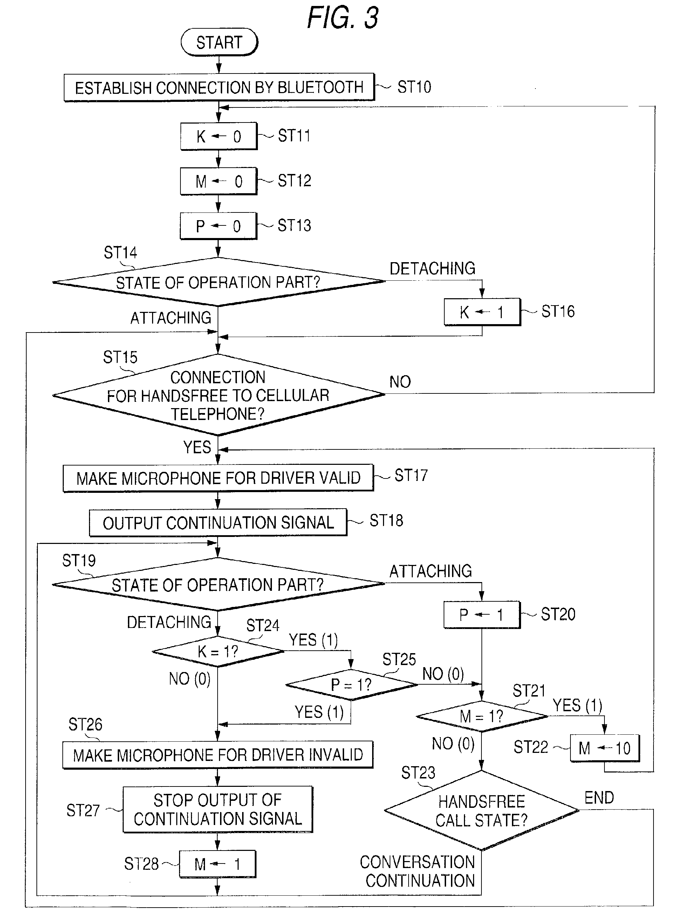

Next, an action of a part of the side of the car stereo body part 10 of the handsfree call apparatus according to the embodiment will be describedwith reference to a flowchart shown in Fig. 3.

After a power source is turned on, connection processing by Bluetooth is first performed in step 10. When a link between the car stereo operation part 11 and the cellular telephone 14 is established in this processing, flags K, M, P are respectively set to "0" in steps 11 to 13. After the flags K, M, P are set, a state of the operation part 11 is determined instep 14. When the operation part 11 is attached, the flowchart proceeds to step 15 and it is determinedwhether or not connection for hands free to the cellular telephone is made. That is, it is determined whether or not an outgoing button or an incoming button of the driver operation part 13 is operated.

When the outgoing button or the incoming button is not operated, it returns to step 11. On the contrary, when the outgoing button or the incoming button is operated, it proceeds to step 17 and the microphone 133 for driver is made valid. Further, a continuation signal is outputted in step 18. After the continuation signal is outputted, a state of the operation part 11 is determined in step 19. When the operation part 11 is attached, it proceeds to step 20 and the flag P is set to "1". After the flag P is set to "1", it is determined whether or not the flag M is set to "1" in step 21. In this case, the flag M keeps being set to "0" in step 12, so that it proceeds to step 23. When it proceeds to step 23, it is determined whether or not it is in a handsfree call state, namely conversation continues.

When it is in the handsfree call state, namely the conversation continues, it returns to step 19 and a state of the operation part 11 is determined. On the contrary, when it is not in the handsfree call state, namely the conversation ends, it returns to step 15. While a driver converses in a state in which the operation part 11 is attached to the car stereo body part 10, processing of step 19, step 20, step 21 and step 23 is performed continuously.

Then, when the operation part 11 is detached from the car stereo body part 10 in a state in which the conversation continues, it proceeds from step 19 to step 24 . When it proceeds to step 24, it is determined whether or not the flag K is set to "1". In this case, it is in a state in which the flag K is set to "0" in step 11, so that it proceeds to step 26 and the microphone 133 for driver is made invalid. Subsequently, an output of the continuation signal is stopped in step 27 and further the flag M is set to "1" in step 28.

That is, when the operation part 11 is detached while the driver converses, the microphone 133 for driver becomes invalid and the output of the continuation signal stops. Also at this time, the microphone 111 for fellow passenger of the operation part 11 becomes valid and a call by a fellow passenger is enabled. While the operationpart 11 is detached, processing of step 19, step 24, step 26, step 27 and step 28 is performed repeatedly.

Thereafter, when the operation part 11 is attached to the car stereo body part 10, it proceeds from step 19 to step 20 and after the flag P is set to "1" in step 20, it is determined whether or not the flag M is set to "1" in step 21. In this case, it is set to "1" in step 28, so that it proceeds to step 22 and the flag M is set to "0" and it returns to step 17. When it returns to step 17, the microphone 133 for driver is made valid and further a continuation signal is outputted in step 18. That is, the operation part 11 is returned to the car stereo body part 10, so that it returns to a handsfree call state in the car stereo body part 10. While the operation part 11 is returned to the car stereo body part 10, processing of step 19, step 20, step 21 and step 23 is performed repeatedly. Subsequently, the two processing described above is repeated alternately according to attachment and detachment of the operation part 11. When the handsfree call state ends, it proceeds from step 23 to step 15.

On the other hand, when the operation part 11 is detached from the car stereo body part 10 before powering on the car stereo, it proceeds from step 14 to step 16 and the flag K is set to "1". Then, while the operation part 11 is detached, processing of step 19, step 24, step 25, step 21 and step 23 is performed repeatedly. Then, while it is attached to the stereo body part 10 once in this state and is detached again, processing of step 19, step 20, step 21 and step 23 is performed repeatedly.

Then, when the operation part 11 is detached again, the flag P is set to "1" in step 20 previously, so that processing of step 19, step 24, step 25, step 26, step 27 and step 28 is performed repeatedly. That is, when the operation part 11 is detached from the car stereo body part 10 before powering on the car stereo, unless the operation part 11 is once returned to the car stereo body part 10 and thereafter is detached, the microphone 133 for driver keeps valid and when the operation part 11 is detached, the microphone 133 for driver becomes invalid and the microphone 111 for fellow passenger of the operation part 11 becomes valid and a call of a fellow passenger is enabled.

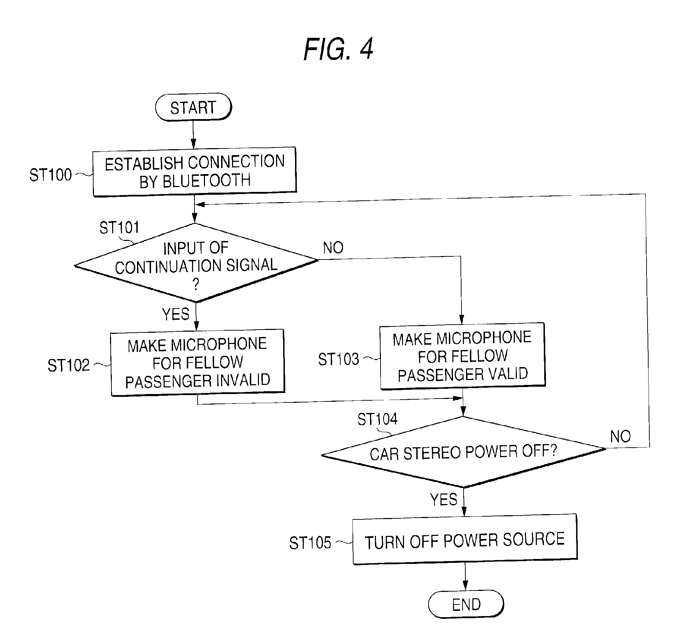

Next, an action of a part of the side of the car stereo operation part 11 of the handsfree call apparatus according to the embodiment will be described with reference to a flowchart shown in Fig. 4.

After a power source is turned on, connection processing by Blue tooth is first performed in step 100 . When a link between the car stereo body part 10 and the cellular telephone 14 is established in this processing, the presence or absence of an input of a continuation signal is determined in step 101. When the input of the continuation signal is present, the flowchart proceeds to step 102 and the microphone 111 for fellow passenger is made invalid. That is, the side of the car stereo body part 10 makes the microphone 133 for driver valid, so that the microphone 111 for fellow passenger of the side of the operation part 11 is made invalid.

After the microphone 111 for fellow passenger is made invalid, it proceeds to step 104 and it is determined whether or not a power source of the car stereo has shifted to OFF. This determination is made by whether or not the side of the car stereo body part 10 is detached from the link by Bluetooth. When the side of the car stereo body part 10 is detached from the link by Bluetooth, it is decided that the power source of the car stereo has shifted to OFF. When the power source of the car stereo has shifted to OFF, a power source of the operation part 11 is turned off in step 105. When the power source of the car stereo has not shifted to OFF, it returns to step 101 as it is. On the other hand, when the input of the continuation signal is absent in the determination of step 101, the microphone 111 for fellow passenger is made valid in step 103. After the microphone 111 for fellow passenger is made valid, it proceeds to step 104 and the processing similar to the above is performed.

Thus, according to the handsfree call apparatus of the embodiment, when connections among the cellular telephone 14, the car stereo body part 10 and the operation part 11 are made by Bluetooth and the operation part 11 is attached to the car stereo body part 10, a call using the cellular telephone 14 can be made at the side of the car stereo body part 10 and when the operation part 11 is detached from the car stereo body part 10, the call using the cellular telephone 14 can be made at the side of the operation part 11. Therefore, a driver can make a handsfree call by placing the microphone 133 for driver near to a driver of a sun visor etc. and when a fellow passenger wants to call instead of the driver, a call can be made in the operation part 11 by detaching the operation part 11 from the car stereo body part 10.

Also, connections among the cellular telephone 14, the car stereo body part 10 and the operation part 11 are made by Bluetooth, so that the connections among these can be achieved very easily at low cost.

Also, by being applied to a car stereo of a configuration constructed so that the operation part 11 can be detached from , the car stereo body part 10 for the purpose of theft prevention, the fellow passenger can make a call without seeking the cellular telephone 14 even when the cellular telephone 14 is present in any place of the inside of a vehicle.

Incidentally, in the embodiment, the case of being applied to the car stereo is described, but it goes without saying that it can be applied to all the vehicle-mounted electronic devices such as car navigation.

In accordance with a handsfree call apparatus of the invention according to one aspect of the invention, when connections among a cellular telephone, a body part and an operation part of a vehicle-mounted electronic device are made by a wireless communication line and the operation part of the vehicle-mounted electronic device is attached to the body part, a call using the cellular telephone is enabled at the side of the body part and when the operation part of the vehicle-mounted electronic device is detached from the body part, a call using the cellular telephone is enabled at the side of the operation part, so that while the operation part of the vehicle-mounted electronic device is attached to the body part, a driver enables a handsfree call at the side of the body part and when a fellow passenger wants to call instead of the driver, a call is enabled at the side of the operation part by detaching the operation part from the body part.

In accordance with a handsfree call apparatus of the invention according to another aspect of the invention, when connections among a cellular telephone, a body part and an operation part of a vehicle-mounted electronic device are made by a wireless communication line and the operation part of the vehicle-mounted electronic device is attached to the body part, a call using the cellular telephone is enabled at the side of the body part and when the operation part of the vehicle-mounted electronic device is detached from the body part, a call using the cellular telephone is enabled at the side of the operation part, so that a driver enables a handsfree call by placing a microphone acting as first voice input means near to the driver of a sun visor etc. and when a fellow passenger wants to call instead of the driver, by detaching the operation part of the vehicle-mounted electronic device from the body part, a voice input by a microphone acting as second voice input means becomes valid and a call using the operation part is enabled.

In accordance with a handsfree call method of the invention according to another aspect of the invention, when an operation part of a vehicle-mounted electronic device is attached to a body part, a call using a cellular telephone is enabled at the side of the body part and when the operation part of the vehicle-mounted electronic device is detached from the body part, a call using the cellular telephone is enabled at the side of the operation part, so that a driver enables a handsfree call by placing a microphone for call near to the driver of a sun visor etc. and when a fellowpassenger wants to call instead of the driver, by detaching the operation part from the body part, a voice input by a microphone of the operation part becomes valid and a call is enabled.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A handsfree call apparatus provided in a vehicle-mounted electronic device in which an operation part can be attached and detached to and from a body part and can communicate between each of the operation part and the body part and a cellular telephone by a wireless communication line, the apparatus comprising:
an attachment and detachment detector for detecting attachment and detachment of the operation part to and from the body part; and
a control section for enabling a handsfree call through the cellular telephone at the side of the body part when the attachment and detachment detector detects that the operation part is attached to the body part and enabling a call through the cellular telephone at the side of the operation part when it detects that the operation part is detached from the body part.

2. A handsfree call apparatus provided in a vehicle-mounted electronic device in which an operation part can be attached and detached to and from a body part and can communicate between each of the operation part and the body part and a cellular telephone by a wireless communication line, the apparatus comprising:
a first voice input section provided at the side of the body part;
a second voice input section provided at the side of the operation part;
a first communication section for sending voice inputted to the first voice input means at the side of the body part to the cellular telephone by the wireless communication line;
a second communication section for sending voice inputted to the second voice input means at the side of the operation part to the cellular telephone by the wireless communication line;
an attachment and detachment detector for detecting attachment and detachment of the operation part to and from the body part;
a first control section for sending only voice inputted by the first voice input section when the attachment and detachment detector detects that the operation part is attached to the body part and outputting a continuation signal while the operation part is attached to the body part; and
a second control section for sending only voice inputted by the second voice input section when the continuation signal is not outputted from the body part.

3. A handsfree call method using a vehicle-mounted electronic device in which an operation part can be detached from a body part and each of the operation part and the body part is provided with a microphone for call and can communicate with a cellular telephone by wireless, the method comprising:
switching a microphone at the side of the body part and a microphone at the side of the operation part according to attachment and detachment of the operation part to and from the body part;
enabling a call using the cellular telephone at the side of the body part while the operation part is attached to the body part; and
enabling a call using the cellular telephone at the side of the operation part while the operation part is detached from the body part.
